# EUROPEAN PATENT APPLICATION

(11) **EP 4 094 868 A1**
(43) Date of publication of application: **30.11.2022**
(21) Application number: 21175886.7
(22) Date of filing: 26.05.2021
(51) Int. Cl.: B23C 5/28, B23C 5/06

(54) **FLANK COOLING FOR A MILLING TOOL**

(71) Applicant: AB Sandvik Coromant, 811 81 Sandviken (SE)
(72) Inventor: BERGMAN, Stefan, 811 81 Sandviken (SE); LARSSON, Olof, 811 81 Sandviken (SE)
(74) Representative: Sandvik

(57) **Abstract**

The invention relates to a tool body (1) for a milling tool. The tool body includes a front end (5), a rear end (6), an envelope surface (7) extending between the front end (5) and the rear end (6), a central recess (8) extending from the rear end (6) and configured to receive coolant from a spindle of a machine, at least one insert seat (3) in which a cutting insert (2) can be securely mounted formed in a transition between the front end (5) and the envelope surface (7), and at least one coolant passageway for passage of coolant from the central recess (8) to the exterior of the tool body (1). The coolant passageway comprises a first portion (9) extending from the central recess (8) in an outward direction towards the envelope surface (7), and a second portion extending from the first portion (9) to an outlet (11) in the exterior of the tool body (1), wherein the outlet (11) is located in the insert seat (3) and/or in the envelope surface (7) behind the insert seat with respect to a rotation direction of the tool body (1). The second portion of the coolant passageway is directed towards the insert seat (3) such that, when a cutting insert (2) comprising a cutting edge (24) and a flank face is mounted in the insert seat (3) such that the flank face faces outward with respect to the tool body, coolant emerging from the outlet (11) will pass along the flank face towards the cutting edge (24). The second portion of the coolant passageway is a channel (10) having a length that is greater than a width thereof.

## Description

### TECHNICAL FIELD

The invention relates to milling tools for metal cutting, and in particular to milling tools having means for internal coolant distribution.

### BACKGROUND ART

In the field of metal cutting, milling tools are often used for machining workpieces of various materials, such as metal. For cost-efficiency, it is common to use a milling tool which comprises on one hand a tool body, and on the other hand detachable and replaceable cutting inserts mounted therein. It is also common to use coolant, for example in the form of a cutting fluid, during a milling operation in order to be able to increase productivity. Many milling tools and tool bodies available in the market are therefore provided with internal coolant passage systems configured to supply coolant to the cutting edges. Some milling tools are provided with coolant outlets adjacent each of the cutting inserts mounted therein in order to effectively supply coolant to the active cutting edge and corresponding rake face of each cutting insert. Coolant is primarily used to control heat at the cutting edge, but also assists in chip removal and can prevent re-cutting of chips.

For some machining applications it may be desirable to direct coolant to the flank or relief surface of a cutting insert. US 10201862 discloses a milling tool with internal channels providing coolant towards the cutting edge wherein the coolant is provided via a coolant chamber that is bounded by a deflection surface arranged to deflect coolant such as to pass over and along the relief surface of the cutting insert and then reach the cutting edge. However, this arrangement will cause the coolant to be provided as an elongated sheet traveling over the relief surface, which may not be optimal in all cases.

Accordingly, there is a need for improved cooling of cutting inserts of milling tools.

### SUMMARY

It is an objective of the present invention to mitigate the shortcomings of the prior art and to provide a milling tool having means for efficient cooling. Another objective is to increase the tool life of tools and cutting inserts for milling.

Thus, according to a first aspect, the invention relates to a tool body for a milling tool having a central rotation axis around which the tool body is rotatable. The tool body includes a front end, a rear end, an envelope surface extending between the front end and the rear end, a central recess extending from the rear end and configured to receive coolant from a spindle of a machine, at least one insert seat in which a cutting insert can be securely mounted formed in a transition between the front end and the envelope surface, and at least one coolant passageway for passage of coolant from the central recess to the exterior of the tool body. The coolant passageway comprises a first portion extending from the central recess in an outward direction towards the envelope surface, and a second portion extending from the first portion to an outlet in the exterior of the tool body, wherein the outlet is located in the insert seat and/or in the envelope surface behind the insert seat with respect to a rotation direction of the tool body. The second portion of the coolant passageway is directed towards the insert seat such that, when a cutting insert comprising a cutting edge and a flank face is mounted in the insert seat such that the flank face faces outward with respect to the tool body, coolant emerging from the outlet will pass along the flank face towards the cutting edge. The second portion of the coolant passageway is a channel having a length that is greater than a width thereof.

Thereby, the applied coolant will have a well-defined direction towards a location where it is most needed and will be provided as a coherent stream at high speed. The inventors have found that coolant applied to the flank of a milling cutting insert in this way may improve the cooling effect and thus also increase the tool life. The coolant may be a cutting fluid, for example based on oils or oil-water emulsions. The coolant may be applied as a flood coolant, i.e. as a stream of fluid. The coolant may also be provided in the form of a mist, e.g. as a spray of oil mist, which is sometimes referred to as minimum quantity lubrication (MQL).

The envelope surface may have a shape that is at least partly circular cylindrical. For example, the shape of the envelope surface may be formed by multiple circular cylindrical sections of different diameters, and/or sections with varying diameter, e.g. truncated cone-shaped sections. Accordingly, a cross section of the envelope surface transverse the central rotation axis may have a circular, or substantially circular, shape.

The central rotation axis extends in a direction from the rear end to the front end of the tool body. Throughout this specification, when referring to the tool body, any references to axial-, tangential- and/or radial directions or lines, or references to an outward or an inward direction, are made with respect to this central rotation axis. Thus, outward directions and inward directions refer to directions along which the distance to the central rotation axis increases and decreases, respectively. Moreover, a rearward direction is a direction towards a rear end plane, i.e. a plane through the rear end which is perpendicular to the central rotation axis, and a forward direction is a direction towards a front end plane, i.e. a plane through the front end which is perpendicular to the central rotation axis.

The insert seat may comprise a bottom surface arranged to abut a lower side of a cutting insert mounted in the insert seat. The bottom surface may face a tangential direction, or a substantially tangential direction, with respect to the tool body at the position of the insert seat. The milling tool body may also include chip pockets. In particular, one chip pocket may be provided in front of each insert seat in a direction of rotation of the tool body. Accordingly, each insert seat may be formed in a chip pocket, in a transition between the front end and the envelope surface. The insert seat is thus configured to receive a cutting insert in a cutting position in which a flank face of the cutting insert faces outwards, away from the central rotation axis.

According to the disclosure herein, the second portion of the coolant passageway is a channel. A "channel" as used herein should be understood as an enclosed conduit located inside the tool body, i.e. of which no part has yet reached the exterior of the tool body. Depending on the direction of the channel, the outlet may have various forms. For example, the outlet may partly form an elongated groove in the envelope surface, such that the outlet itself contributes to guiding the coolant in the desired direction. However, in the context of the present disclosure, such elongated groove is not to be considered as part of the channel but as part of the outlet.

The expression "towards the insert seat", as used herein when referring to the direction of the channel/second portion of the coolant passageway, should be understood as a direction along which the distance to the insert seat decreases, but not necessarily a direction that renders the channel to run out completely, or even partly, in the insert seat. The channel may still run out in the envelope surface in the vicinity of the insert seat, immediately behind the insert seat with respect to a rotation direction of the tool body. Accordingly, the outlet of the channel may be located in the envelope surface close to, and rotationally behind, the insert seat, or the outlet may be located in the insert seat close to the envelope surface. The outlet may also be located in a transition between the insert seat and the envelope surface, thus located partly in the insert seat and partly in the envelope surface behind the insert seat with respect to a rotation direction of the tool body. Thereby, a particularly beneficial direction of the stream of coolant may be obtained.

The length of the channel may be at least two times the width thereof. Thus, the length of the channel may be significantly larger than the width of the channel. For example, the length of the channel may be at least three times the width thereof. By having a relatively long channel, the coolant will attain sufficient speed and a well-defined direction such that spread of coolant is reduced. As a consequence, the coolant may emerge from the channel as a coherent stream of fluid, i.e. a jet, at high speed. For example, the length of the channel may be up to 15 times the width of the channel. A channel that is too long may not always be beneficial, though, since this may lead to higher pressure losses. Thus, according to some embodiments, the length of the channel is at most twelve times the width thereof. Accordingly, the length of the channel may be 2-12 times the width thereof. According to some embodiments, the length of the channel is 4-6 times, for example approximately five times, the width thereof.

The length of the channel is measured between the outlet and a location from which the channel extends, i.e. a location at which the channel first meets the first portion of the coolant passageway.

The width of the channel is here to be interpreted as a dimension of the channel transverse to a direction of coolant flow, i.e. transverse to a lengthwise direction of the channel. According to some embodiments, the channel is circular cylindrical. That is, the channel may have a circular shape in a cross section perpendicular to the direction of extension of the channel. In the case of a circular cross section of the channel, the width equals the diameter. A cylindrical channel has advantageous flow characteristics, in particular in the case of a circular cylindrical channel. However, also other shapes of the channel are envisaged. If, for example, the channel is manufactured by wire electrical discharge machining (WEDM) or if the tool body is made by additive manufacturing, also channels of other shapes are possible. In the case of a non-circular cross section of the channel, the width can be interpreted as the largest distance measured across the channel, transverse to the direction of flow.

The width of the channel may depend on the size of the tool body, but could be quite small, for example 1 mm, or even smaller, such as 0.8 mm, which could be achievable without requiring any other means than drilling. Hence, for such small diameters, the length of the channel may be e.g. between 2 and 15 mm.

The channel may be straight, or substantially straight. A straight channel will, to a greater extent than a curved channel, efficiently provide a jet of coolant. Moreover, a straight circular cylindrical channel is easy to produce when manufacturing the tool body, for example by drilling. Such channel may for example be drilled from the outside of the tool body, i.e. as a blind hole meeting the first portion of the coolant passageway.

The channel is preferably not extending along a radial direction with respect to the central rotation axis of the tool body. Instead, to obtain a suitable coolant flow direction for flank cooling, the direction of the channel may be transverse to a radial line of the tool body passing through the location from where the channel extends, or substantially transverse to such radial line, such as differing at most by 20° from such transverse direction. Thus, when viewed from a direction along the central rotation axis, the channel may extend at an angle close to 0°, or at least differing by less than 20°, from a tangential direction with respect to the envelope surface of the tool body at the location from where the channel extends from the first portion of the coolant passageway. According to some embodiments, the channel may extend at an angle of 80°-100°, for example 85°-95° or approximately 90°, to a radial line of the tool body passing through the location from where the channel extends. Hence, the channel may be directed in a tangential direction, or it may be directed slightly outwards in the tool body (i.e. at an angle above 90° to said radial line), or it may be directed slightly inwards in the tool body (i.e. at an angle below 90° to said radial line). The coolant will thus be provided in a direction that is particularly well suited for flank cooling, i.e. such that coolant will efficiently travel over the flank towards the cutting edge of a cutting insert arranged in the insert seat. According to some embodiments, the channel may be directed in a direction that is parallel to, or substantially parallel to, a plane in which the flank face and/or a peripheral side surface of a cutting insert extends when the cutting insert is mounted in the insert seat. For example, the channel may extend at an angle of less than 10°, such as approximately 5°, with respect to such plane.

As a consequence of the channel not extending along a radial direction of the tool body, the outlet, if located completely or partly in the envelope surface, may have an elongated shape forming a groove in the envelope surface in which coolant may flow. Such groove will contribute to direct the coolant from the channel to the cutting edge of a cutting insert mounted in the insert seat of the tool body.

The channel may extend in a direction perpendicular to the central rotation axis. However, the channel may also be directed in a forward direction. Hence, according to some embodiments, the channel extends in a direction that is non-perpendicular to a line parallel to the central rotation axis, although not in a direction parallel to the central rotation axis. According to some embodiments, the channel extends at an angle of 20°-70° to a line parallel to the central rotation axis. This may improve manufacturability of the tool body. Moreover, by arranging the channel in this way it may be easier to obtain a sufficient length of the channel while maintaining an optimal direction of the coolant jet. That is, since a particularly beneficial direction of the coolant jet is achieved if the channel is oriented such that, when viewed from a direction along the central rotation axis, the channel extends in a direction that is relatively close to a tangential direction with respect to the envelope surface at the location from where the channel extends, said location should, in such view, be relatively close to the insert seat. However, when the channel emerges from a location close to the insert seat, the available space for a channel is limited. By using an "inclined" channel extending forward, i.e. partly in the axial direction, the available space for the channel within the tool body (i.e. the distance before reaching the exterior of the tool) is increased. The available space within a tool body may be even more limited for tools having a large number of insert seats, further increasing the benefit of using such forwardly extending channels.

The more the channel extends in an axial direction, the easier it may be to achieve a sufficient length of the channel. However, the coolant effect may not be beneficial if the jet emerges in a direction that is parallel, or close to parallel, with the central rotation axis of the tool body. Thus, the best possible coolant effect may be achieved when the channel is directed according to the range defined above, for example when the channel is directed at an angle of 30°-60°, such as 40°-50°, or approximately 45°, to a line parallel to the central rotation axis.

The first portion of the at least one coolant passageway may comprise a cylindrical cavity. Preferably, the cylindrical cavity is in the form of a circular cylindrical cavity. The first portion can thus be easily manufactured by drilling from the central recess in the tool body. A cylindrical cavity also has advantageous flow characteristics, in particular in the case of a circular cylindrical cavity. The first portion of the coolant passageway may be directed rearwards. Hence, the first portion may extend from the central recess at a location close to the front end of the tool body. For some types of milling tool bodies such design may facilitate drilling the first portion of the coolant passageway from the central recess. It is also envisaged, though, that the first portion is formed such as to extend from the internal recess from a location closer to the rear end of the tool body, for example such as extending in a forward and outward direction. The first portion may extend at least partly from a side wall of said central recess, which side wall may extend along the rotation axis of the tool body. The first portion may have a width of at least twice a width of the channel. In this way, substantial material savings and weight reductions can be achieved, while the channel can be made narrow enough to ensure a high coolant speed toward the cutting edge. The first portion may also have a larger extension in a direction of coolant flow than the channel. The relatively large first portion contributes to exertion of a high pressure on coolant located within the channel and thereby to a higher coolant speed and a more efficient cooling.

The first portion of the coolant passageway may be a blind hole having an end located at a distance from the envelope surface that is less than 10 mm, such as 1-5 mm, or even less. The channel may extend from the end of the blind hole. According to some embodiments, by letting the channel extend from a location close to the envelope surface, i.e. close to the periphery of the tool body, a beneficial direction of the coolant stream towards the insert seat may easily be achieved such that the coolant will flow over the flank towards the cutting edge of a cutting insert arranged within the insert seat.

If the blind hole constituting the first portion of the coolant passageway is drilled from within the internal recess, the hole may extend further towards the envelope surface in comparison to drilling the hole from the outside, which would require subsequent plugging.

According to another aspect, the invention relates to a cutting insert for a milling tool body. The cutting insert comprises an upper side including a rake face, a lower side, a peripheral side extending between the upper side and the lower side and including a flank face, a cutting edge formed in a transition between the upper side and the peripheral side, and a lower edge formed in a transition between the lower side and the peripheral side. The peripheral side comprises an insert groove extending from the lower edge towards a point on the cutting edge. The insert groove has an extension in a direction that corresponds to the direction of the channel in the tool body, and is located such as to extend from the outlet thereof, when the cutting insert is arranged within the insert seat of the tool body.

When using such cutting insert in combination with a tool body according to the invention, the distribution of coolant along the flank face towards the cutting edge will be further improved since the insert groove will assist in maintaining the jet of coolant and reducing unwanted spread thereof.

When the outlet of the channel in the tool body is located partly in the insert seat and partly in the envelope surface, such that the outlet comprises a groove in the envelope surface of the tool body, the insert groove may form a continuation of the outlet groove, i.e. such that a smooth transition between the outlet and the insert groove is obtained. Thereby, the coolant flow path is continuous without any sudden changes and the flow of coolant will not be significantly changed by the transition between the tool body and the peripheral side of the insert.

The insert groove may terminate before reaching the cutting edge. Thereby, the cutting edge geometry is not changed and the cutting performance is not adversely affected by the presence of the insert groove. Thus, the depth of the insert groove decreases along its extension, and may for example decrease uniformly.

### BRIEF DESCRIPTION OF DRAWINGS

Fig. 1 is an isometric view of a milling tool including a milling tool body and a plurality of cutting inserts mounted in insert seats of the tool body.
Fig. 2 is a side view of the milling tool.
Fig. 3 is a cross-sectional view of the milling tool in a section along the central rotation axis through respective first portions of two of the coolant passageways.
Fig. 4 is a top view of a part of the milling tool.
Fig. 5 illustrates an insert seat of the milling tool body.
Fig. 6 is yet another view of the milling tool, but with one of the cutting inserts removed.
Fig. 7 is a cross-sectional view in a section as indicated in Fig. 6.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

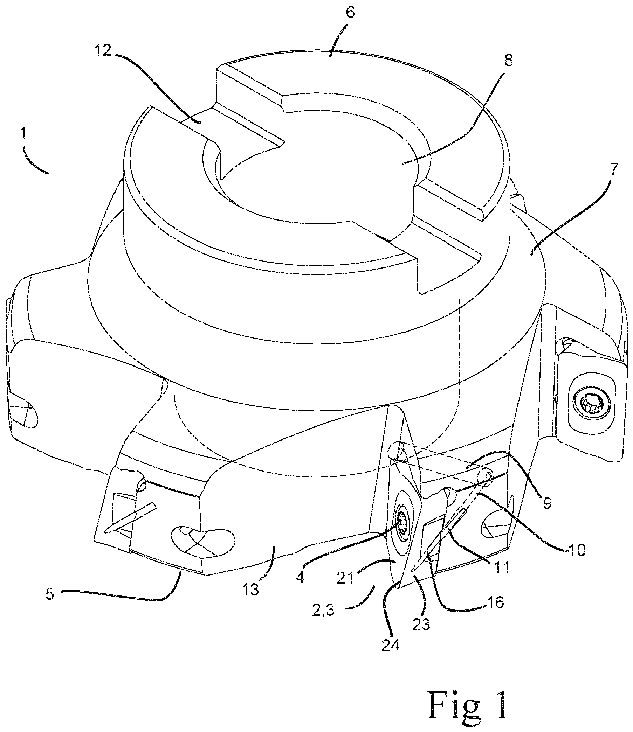

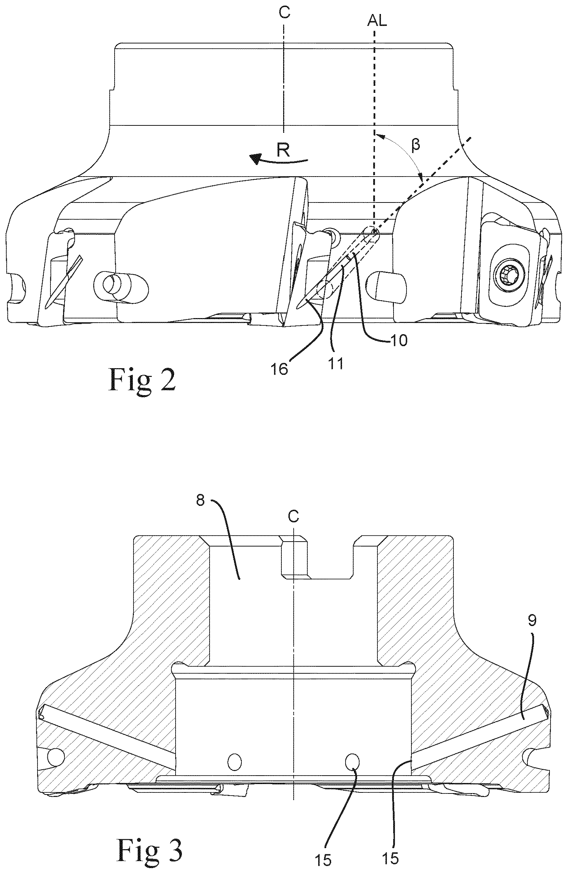

Figures 1-7 illustrate a milling tool including a milling tool body 1. The milling tool body 1 has a front end 5 and a rear end 6 and an envelope surface 7 extending therebetween. In the rear end 6, a coupling interface for coupling the milling tool to a machine tool (not shown) is provided. In this example, the coupling interface is in the form of an arbor coupling including a central recess 8 and a transverse groove 12 configured to engage with a spindle of the machine tool via an adaptor. The tool body is rotatable around a central rotation axis C in a rotation direction R (see fig. 2). The central recess 8, in which coolant is receivable from the spindle, extends from the rear end 6 along the central rotation axis C.

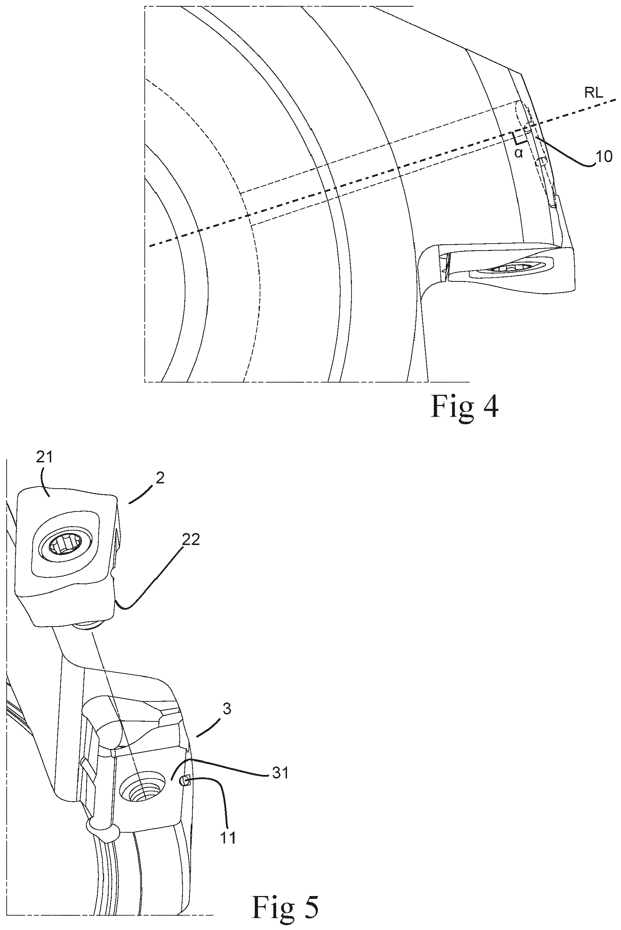

In a transition between the front end 5 and the envelope surface 7, a number of insert seats 3 are formed in the tool body 1. In the shown embodiment, six insert seats 3 are provided. In front of each insert seat 3 in the direction of rotation R, a chip pocket 13 is provided. A cutting insert 2 is mounted in each insert seat 3 with an upper side 21 comprising a rake face and with a lower side 22 facing a bottom surface 31 of the insert seat 3 (see fig. 5). The cutting insert further comprises a peripheral side 23 including a flank face. The cutting inserts 2 are mounted in the insert seats 3 by means of fastening members in the form of screws 4. Each screw 4 securely mounts the insert 2 in the insert seat 3 such that the lower side 22 is pressed against the bottom surface 31 of the insert seat 3. Each cutting insert 2 is indexable and has an active cutting edge 24.

The milling tool body 1 further comprises multiple coolant passageways, in this example one coolant passageway for each cutting insert, for passage of coolant from the central recess 8 to the exterior of the tool body 1. In fig. 1, only one of these coolant passageways are indicated (with dashed lines). Each coolant passageway comprises a first portion 9 extending outward and rearward from the central recess 8, and a second portion, in the form of a channel 10, extending from the first portion 9. The first portion 9 is a circular cylindrical blind hole with relatively large diameter, drilled from the central recess 8 and ending close to the envelope surface 7. In this embodiment, the first portions 9 of the coolant passageways are symmetrically arranged with respect to the central rotation axis C. As best seen in fig. 3, each first portion 9 extends almost all the way to the envelope surface 7 of the tool body. It is beneficial if the first portions 9 extend radially as far as possible without adversely affecting the strength and robustness of the tool body.

The channel 10 is also a circular cylindrical hole, but with smaller diameter, drilled from the exterior of the tool body and meeting the first blind hole 9 at the end thereof. As best seen in fig. 5, showing one of the insert seats 3 with the insert 2 removed, the channel 10 has an outlet 11 located partly in the insert seat 3, and partly in the envelope surface 7 immediately behind the insert seat with respect to the rotation direction R. The outlet 11 thus forms a groove extending in the envelope surface 7 to the insert seat 3.

The channel 10 extends in a direction such that coolant emerging from the channel travels over the flank face of the cutting insert before reaching the cutting edge 24. As best seen in fig. 4, when viewed from a direction along the central rotation axis C, the channel extends at an angle close to 0° from a tangential direction with respect to the envelope surface 7 of the tool body at the location from where the channel 10 extends from the first portion 9 of the coolant passageway. In other words, the channel extends at an angle α of approximately 90° to a radial line RL of the tool body that passes through the location from where the channel extends. For the milling tool according to the illustrated embodiment, such direction of the channel renders the channel to extend at an angle of 5° with respect to a plane in which the flank face of the cutting insert extends when it is mounted in the insert seat.

The channel has a forward direction as well, which is best seen in fig. 2. In this example embodiment, the channel extends at an angle β of approximately 45° to a line AL parallel to the central rotation axis C.

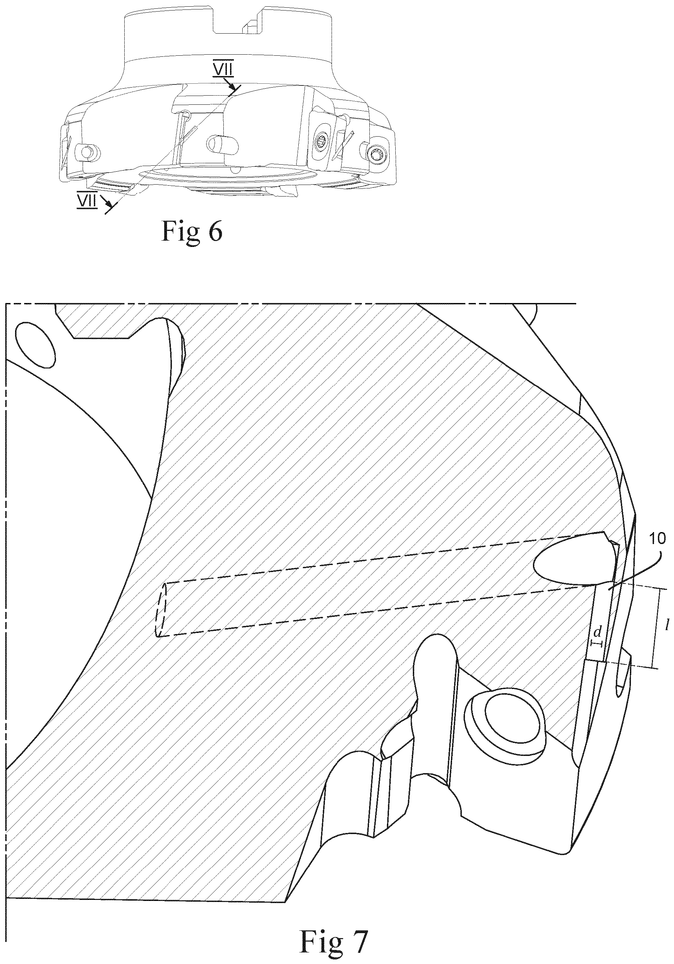

Fig. 7 is a cross sectional view of the channel 10, taken in a section as indicated in fig. 6. As seen in fig. 7, the channel has a length 1 which is approximately five times the diameter d thereof. Thereby, if using flood coolant, a coherent jet of coolant having a beneficial direction and speed when emerging from the channel towards the cutting edge is obtained. The forward direction of the channel, when compared to a direction perpendicular to the central rotation axis, facilitates production of the tool and makes it easy to obtain a sufficient length of the channel while maintaining a suitable direction thereof.

In this example embodiment, the diameter d of the channel 10 is 1 mm, and the length 1 of the channel is 4.6 mm.

The outlet 11 of the channel 10 forms a groove in the envelope surface, further guiding the coolant in a direction corresponding to the extension of the channel. Along its extension towards the insert seat, the groove formed by the outlet has a decreasing depth. In the embodiment described, the outlet 11 is partly located in the insert seat 3 (as best seen in fig. 5). Therefore, another groove 16 is formed in the cutting insert 2 to further guide coolant towards the cutting edge. The insert groove 16 has an extension in a forward direction that corresponds to the extension of the channel 10 and thus forms a continuation of the groove formed by the outlet 11. Accordingly, also the insert groove 16 has a decreasing depth along its extension towards the cutting edge, and the insert groove 16 ends before reaching the cutting edge such as not to interfere therewith.

As seen in the figures, the cutting insert according to the illustrated embodiment has an additional depression in its peripheral side over which the insert groove 16 extends. This depression is not for guiding coolant, though, but for improving mounting of the insert within the insert seat when the peripheral side acts as a support surface abutting a side surface of the insert seat (i.e. when the cutting insert is in a different indexing position). With respect to a reference peripheral side surface, i.e. if not considering such additional depressions or any other local variations of the geometry of the peripheral side, the depth of the insert groove 16 decreases uniformly along its extension.

Each of the first portions 9 of the coolant passageways has an opening 15 in a side wall of the central recess 8. During operation, coolant flows from the spindle of the machine and into the coolant passageways through the openings 15 and exits the coolant passageways through the outlets 11 and is thereby directed toward the active cutting edge 24 of the cutting insert 2. A cover (not shown) is placed over the front opening of the central recess 8, so that coolant leakage is prevented.

The invention is of course not limited to the embodiments disclosed, but may be varied and modified within the scope of the following claims. For example, the shape and width of the first portions and the channels may vary. The tool body may comprise several insert seats, of which not all of the insert seats need to be provided in a transition between the front end and the envelope surface. If the tool body is intended for a deep shoulder milling tool also known as a long edge milling tool, it is possible to have insert seats provided around a periphery of the tool body, in an area between the front end and the rear end. Of course, the shape of the cutting inserts may be varied as well as the number of cutting inserts.

## Claims

1. A tool body (1) for a milling tool having a central rotation axis (C) around which the tool body (1) is rotatable, including:
- a front end (5),
- a rear end (6),
- an envelope surface (7) extending between the front end (5) and the rear end (6),
- a central recess (8) extending from the rear end (6) and configured to receive coolant from a spindle of a machine,
- at least one insert seat (3) in which a cutting insert (2) can be securely mounted formed in a transition between the front end (5) and the envelope surface (7),
- at least one coolant passageway for passage of coolant from the central recess (8) to the exterior of the tool body (1), wherein the coolant passageway comprises a first portion (9) extending from the central recess (8) in an outward direction towards the envelope surface (7), and a second portion extending from the first portion (9) to an outlet (11) in the exterior of the tool body (1), wherein the outlet (11) is located in the insert seat (3) and/or in the envelope surface (7) behind the insert seat with respect to a rotation direction of the tool body, and wherein the second portion of the coolant passageway is directed towards the insert seat (3) such that, when a cutting insert (2) comprising a cutting edge (24) and a flank face is mounted in the insert seat (3) such that the flank face faces outward with respect to the tool body (1), coolant emerging from the outlet (11) will pass along the flank face towards the cutting edge (24), **characterized in that** the second portion of the coolant passageway is a channel (10) having a length (*l*) that is greater than a width (*d*) thereof.

2. A tool body according to claim 1, wherein the outlet is located partly in the insert seat and partly in the envelope surface behind the insert seat with respect to a rotation direction of the tool body.

3. A tool body according to any of the previous claims, wherein the length of the channel is at least two times the width thereof.

4. A tool body according to any of the previous claims, wherein the length of the channel is at most twelve times the width thereof.

5. A tool body according to any of the previous claims, wherein the channel is circular cylindrical and the width is the diameter of the channel.

6. A tool body according to any of the previous claims, wherein the channel is straight.

7. A tool body according to any of the previous claims, wherein the channel extends at an angle (α) of 80°-100° to a radial line (RL) of the tool body passing through the location from where the channel extends.

8. A tool body according to any of the previous claims, wherein the channel is directed in a forward direction.

9. A tool body according to any of the previous claims, wherein the channel extends at an angle (β) of 20°-70° to a line (AL) parallel to the central rotation axis.

10. A tool body according to any of the previous claims wherein the first portion of the coolant passageway is directed in a rearward direction.

11. A tool body according to any of the previous claims, wherein the first portion of the coolant passageway is a blind hole having an end located at a distance from the envelope surface that is less than 10 mm.

12. A tool body according to claim 11 wherein the channel extends from the end of the blind hole.

13. A cutting insert (2) for a tool body (1) according to any of the claims 1-12 wherein the cutting insert (2) comprises:
- an upper side (21) including a rake face,
- a lower side (22),
- a peripheral side (23) extending between the upper side (21) and the lower side (22) and including a flank face,
- a cutting edge (24) formed in a transition between the upper side (21) and the peripheral side (23), and
- a lower edge formed in a transition between the lower side (22) and the peripheral side (23), and wherein
the peripheral side (23) comprises an insert groove (16) extending from the lower edge towards a point on the cutting edge (24), wherein the insert groove (16) has an extension in a direction that corresponds to the direction of the channel (10) in the tool body (1), and is located such as to extend from the outlet (11) thereof, when the cutting insert (2) is arranged within the insert seat (3) of the tool body (1).

14. A cutting insert according to claim 13, wherein the insert groove terminates before reaching the cutting edge.
